Europäisches Patentamt

European Patent Office

Office européen des brevets

(19)

(11) Numéro de publication: **0 124 430**
**B1**

(12) **FASCICULE DE BREVET EUROPEEN**

(45) Date de publication du fascicule du brevet: **14.12.88**

(51) Int. Cl.⁴: **F 16 L 37/26, F 16 L 19/02**

(21) Numéro de dépôt: **84400815.1**

(22) Date de dépôt: **20.04.84**

(54) **Dispositif de raccordement télédémontable.**

(30) Priorité: **27.04.83 FR 8306963**

(43) Date de publication de la demande:
**07.11.84 Bulletin 84/45**

(45) Mention de la délivrance du brevet:
**14.12.88 Bulletin 88/50**

(84) Etats contractants désignés:
**BE CH DE GB IT LI SE**

(56) Documents cités:
**DE-C- 311 899**
**FR-A- 749 271**
**FR-A-1 217 013**
**FR-A-1 260 697**
**US-A-2 219 053**

(73) Titulaire: **COMMISSARIAT A L'ENERGIE ATOMIQUE**
**31/33, rue de la Fédération**
**F-75015 Paris (FR)**

(72) Inventeur: **Abbes, Claude**
**5 Chemin du crêt du Loup**
**F-42000 Saint Etienne (FR)**
Inventeur: **Rouaud, Christian**
**Les Genêts**
**F-07700 Bourg Saint Andeol (FR)**
Inventeur: **Valla, Jean c/o Soc. CEFILAC**
**90, rue de la Roche-du-Geai**
**F-42029 Saint Etienne Cedex (FR)**
Inventeur: **de Villepoix, Raymond**
**La Chatelière**
**F-26290 Donzere (FR)**
Inventeur: **Demay, Robert**
**42 rue André Speeckaert**
**F-94240 l'Haye les Roses (FR)**
Inventeur: **Forges, Robert**
**Avenue Achille Maucuer Les Charagons**
**F-84500 Bollene (FR)**

(74) Mandataire: **Mongrédien, André et al**
**c/o BREVATOME 25, rue de Ponthieu**
**F-75008 Paris (FR)**

Courier Press, Leamington Spa, England.

EP 0 124 430 B1

## Description

L'invention se rapporte à un dispositif de raccordment étanche de deux tuyauteries d'un type conforme au préambule de la revendication 1 ou 2.

Dans les cellules actives équipées d'appareils de télémanipulation, les systèmes de raccordement de tuyauteries doivent d'une part permettre des interventions rapides en limitant au minimum les mouvements de va-et-vient des dispositifs de préhension et d'autre part assurer une grande précision dans les emboîtements afin d'assurer après serrage une étanchéité conforme aux spécifications.

Par ailleurs, les fluides véhiculés dans les canalisations sont souvent très agressifs et les joints d'étanchéité choisis doivent être entièrement métalliques.

On connaît, par le brevet français No. 1260697, un raccord télédémontable de ce type. Il se compose de trois parties: un boîtier ouvert d'un côté en goulotte vers le haut et terminé de l'autre par un embout de jonction avec un élément de tuyauterie, un cylindre creux fileté présentant à ses extrémités d'une part un embout de jonction avec l'autre élément de tuyauterie et d'autre part une collerette, enfin un écrou solidaire du cylindre manoeuvré par une tige munie de deux bras curvilignes et terminée par une collerette qui peut s'accoller à celle du cylindre fileté. Les deux collerettes viennent se loger dans le boîtier et peuvent s'écarter si l'on agit sur l'écrou, de sorte que la collerette du cylindre vienne écraser sur le boîtier un joint torique qu'elle porte.

Cependant, dans un dispositif de raccordement de ce type, il est nécessaire d'exercer un effort de serrage important sur le levier de serrage, en particulier lorsque le joint utilisé est un jount métallique pour lequel l'effort de serrage requis est élevé.

On connaît également (FR—A—1 217 013) un raccord de deux tuyauteries. Chaque tuyauterie est terminée par une surface conique de faible conicité. Des plaques présentent un cône intérieur qui s'adapte aux surfaces coniques. Ces plaques sont munies de trous pour des boulons de serrage. Un collier de serrage à section en "U" agit sur les surfaces extérieures coniques des colliers coopérants respectifs de manière à pousser l'une vers l'autre de façon étanche les deux extrémités des tuyauteries. Le collier est serré par un moyen tel qu'une vis, un mécanisme de blocage à genouillère ou une pince à dégagement rapide.

Toutefois, un raccord de ce type n'est pas télédémontable. Il peut donc difficilement être actionné au moyen d'un sytème de télémanipulation tel que l'on en trouve dans les cellules chaudes du domaine nucléaire. En outre, dans un dispositif de ce type, il est nécessaire d'exercer un effort de serrage important, en particulier lorsque le joint utilisé est un joint métallique.

La présente invention a pour but de remédier à ces inconvénients. Telle qu'elle est caractérisée dans les revendications, elle résout le problème consistant à créer un dispositif de raccordement pour deux pièces, par exemple des tuyauteries, avec lequel l'effort de serrage requis soit très inférieur à ce qui est nécessaire dans les dispositifs de l'art antérieur. Cet avantage est obtenu grâce à la présence d'un système multiplicateur d'effort qui permet d'assurer au droit du joint d'étanchéité un effort de serrage très largement supérieur à l'effort moteur délivré en amont par les appareil de serrage télémanipulés.

De façon plus précise, le système multiplicateur comprte les éléments définis par la partie caractérisante de la revendication 1 ou 2. Ces deux revendications indépendantes de même catégorie caractérisent deux modes de réalisation de la même et unique invention qui repose sur la notion de multiplicateur d'effort obtenu essentiellement par la présence des trois surfaces, de la couronne et de leur inter-relation.

L'invention est exposée plus en détail à l'aide de dessins représentant seulement des exemples de réalisation.

—la figure 1 représente une vue en coupe d'un dispositif de raccordement télédémontable conforme à la présente invention;

—les figures 2 et 3 illustrent l'insertion des deux parties du dispositif de raccordement de l'invention l'une dans l'autre;

—les figures 4 et 5 sont des vues de détail montrant des variantes de réalisation des surfaces coniques;

—la figure 6 est une vue en coupe longitudinale représentant un deuxième mode de réalisation d'un dispositif de raccordement télédémontable conforme à la présente invention;

—la figure 7 est une variante de la figure 6 comprtant une deuxième surface conique composée de deux parties d'angles de conicité distincts;

—la figure 8 est une variante du mode de réalisation de la figure 6;

—les figures 9 et 10 (vue de la figure 9 selon E) représentent une autre variante du dispositif télédémontable.

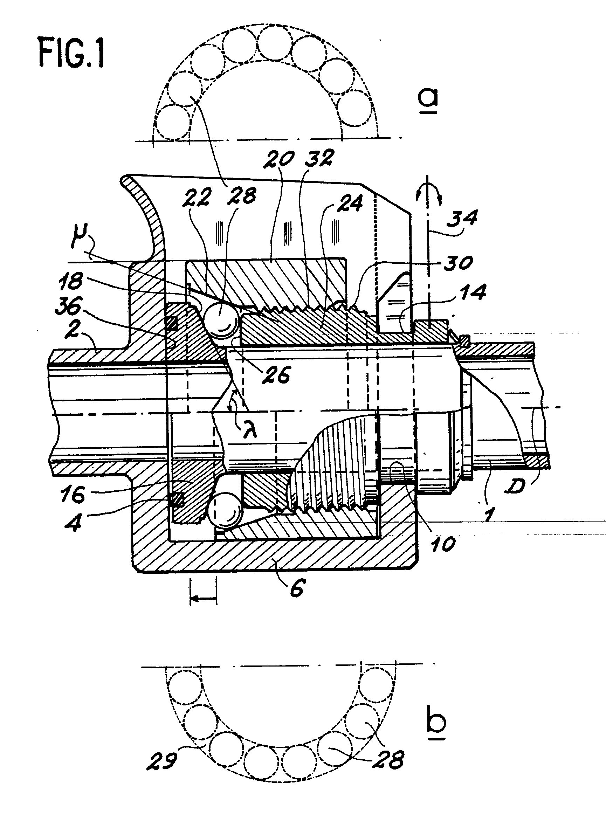

On a représenté sur la figure 1 une vue en coupe longitudinale d'un dispositif de raccordment télédémontable conforme à la présente invention.

Ce dispositif se compose d'une première pièce 1 et d'une seconde pièce 2. Dans l'exemple de réalisation décrit, les pièces 1 et 2 sont constituées par des tuyauteries. Ces tuyauteries, d'axe longituidnal D, doivent être raccordées l'une à l'autre au moyen d'un joint statique 4 de haut étanchéité et de grande fiabilité. Lorsque les fluides véhiculés dans les canalisations 1 et 2 sont agressifs, le joint d'étanchéité 4 doit être entièrement métallique. On pourra choisir par exemple un joint à revêtement inox, zirconium, tantale, etc.

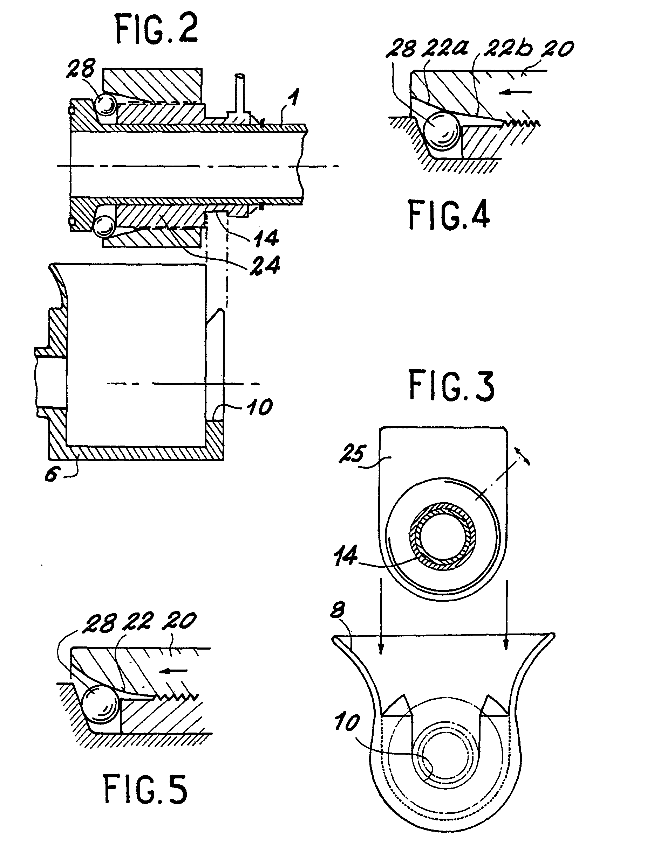

Le dispositif de l'invention comporte des moyens pour lier en translation les tuyauteries 1 et 2. Dans l'exemple décrit, ces moyens sont constitués par un boîtier 6 soudé à l'extrémité de la tuyauterie 2 et comportant une goulotte d'introduction 8 visible en particulier sur la figure 3, et qui se termine par un demi-cylindre 10. Les moyens pour lier en translation les tuyauteries 1 et 2 comportent en outre une bague 24 qui entoure l'extrémité de la tuyauterie 1. La bague 24 comporte une gorge circulaire 14 qui vient s'engager dans le demi-cylindre 10 du boîtier 6. Lorsque cette opération est réalisée, les tuyauteries 1 et 2 sont liées en translation selon la direction D.

Le dispositif de raccordement de l'invention comporte en outre un premier élément présentant une première surface conique d'axe D et d'angle λ. Dans l'exemple représenté sur la figure 1, ce premier élément, désigné par la référence 16, est solidaire de la tuyauterie 1. L'élément 16 se présente sous la forme d'un flasque comportant une surface 18 formant un angle λ avec l'axe longitudinal D des tuyauteries 1 et 2. L'angle λ est inférieur à 90° mais proche de cette valeur. A titre d'exemple λ peut être égal à 75°.

Le dispositif comporte un second élément présentant une deuxième surface conique d'axe D. Dans l'exemple de réalisation décrit, ce second élément est constitué par une bague 20 qui comporte un alésage conique 22 qui forme un angle μ avec l'axe longitudinal D. A titre d'exemple, l'angle μ peut être de 15°.

Le dispositif comporte encore un troisième élément présentant une troisième surface plane perpendiculaire à l'axe D. Dans l'exemple de réalisation décrit, le troisième élément est constitué par la bague cylindrique 24 comportant une face frontale 26 à l'opposé de la gorge circulaire 14.

Au moins un élément intermédiaire 28 est situé à l'intérieur de l'espace délimité par lesdites première, deuxième et troisième surfaces 18, 22 et 26. Cet élément intermédiaire peut être constitué par une série de galets de forme appropriée présentant entre eux un jeu permettant leur mouvement radial. Il peut être constitué également, comme représenté sur la figure 1, par une série de billes en acier ou analogue, dont le nombre est déterminé de telle manière qu'elles soient sensiblement tangentes entre elles (vue de détail a) lorsque la couronne de billes est à son diamètre le plus petit. Lorsque la couronne est à son diamètre le plus grand (vue b), les billes présentent entre elles un espace 29. L'utilisation de billes est particulièrement intéressante car elle fait intervenir un mélange de frottement, de roulement et de glissement favorable à l'obtention d'un coefficient multiplicateur important.

Le dispositif comporte des moyens pour rapprocher le premier élément, à savoir le flasque 16, et le second élément, à savoir la bague 20, l'un de l'autre. Dans l'exemple décrit, ces moyens sont constitués par un pas de vis 30 réalisé sur le diamètre externe de la bague 24 et sur l'alésage interne 32 de la bague 20. La bague 24 est immobilisée en translation par rapport aux tuyauteries 1 et 2 par rapport au boîtier 6 grâce à la rainure 14 engagée dans le demi-cylindre 10. La bague 20 est immobilisée en rotation par rapport au boîtier 6, par la partie parallélépipédique 25 (voir figure 3). La bague 24 est mobile en rotation.

Elle peut être entraînée au moyen d'une tige de manoeuvre 34. Ainsi, lorsque l'on entraîne en rotation la bague 24 dans un sens approprié, la bague 20 se déplace vers le plan de jonction 36 du boîtier 6 et du flasque 16.

Le principe de fonctionnement est le suivant: lorsque l'on déplace la bague 20 de droite à gauche sur la figure 1, (figures 1b et 1a 1/2 vue inférieure représentant le raccord non serré, 1/2 vue supérieure représentant le raccord serré), on exerce sur les billes 28 une action de contact radiale

$$P = \frac{F}{tg(\mu + \varphi)},$$

étant l'angle de frottement entre la surface 22 et la surface des billes 28.

A son tour, chaque bille 28 exerce sur la surface 18 une action de contact longitudinale (parallèle à l'axe D)

$$Q = \frac{P}{tg(90 - \lambda + \varphi)}.$$

On suppose que l'angle de frottement entre la surface 18 et la surface de la bille 28 est le même que l'angle de frottement entre la surface de la bille et la surface 22.

La résultante R de l'action de contact longitudinale exercée sur le flasque 16 est alors égale à

$$\frac{F}{tg(\mu + \varphi) \cdot tg(90 - \lambda + \varphi)}.$$

Si l'on suppose que $(90 - \lambda) = \mu = 15°$ et que le coefficient de frottement est égal à 0,10, ce qui correspond à un angle φ de 6°, on obtient un coefficient multiplicateur de l'effort égal à 7,14.

Si, pour les mêmes valeurs de λ et μ, le coefficient de frottement est de 0,21, (ce qui correspond à un angle φ de 12°), le coefficient de multiplication est de 3,85.

On a représenté sur les figures 2 et 3 l'insertion des deux parties du dispositif de raccordement l'une dans l'autre. La gorge circulaire 14 pratiquée dans la bague 24 est disposée au niveau du demi-cylindre 10 dans le sens longitudinal. On remarque sur la figure 3 la forme particulière de la bague 20. Elle présente une forme semi-cylindrique à sa partie inférieure et parallélépipédique 25 à sa partie supérieure de manière à constituer un verrouillage en rotation.

La figure 4 montre une variante de réalisation dans laquelle la surface conique 22 est constituée de deux surfaces coniques 22a et 22b de conicités différentes. L'angle de la surface conique 22a est plus important que celui de la surface 22b. La surface conique 22a permet un mouvement d'avance rapide du flasque 16 lorsque l'effort de serrage n'est pas important. Au contraire, la partie 22b permet d'exercer l'effort de serrage final et correspond à un coefficient multiplicateur de l'effort plus grand.

On a représenté sur la figure 5 une variante de la figure 4. La surface 22 présente une variation continue de l'angle de conicité. La partie de la surface 22 située à gauche sur la figure 5 présente un angle de conicité plus important, de manière à permettre une avance rapide, comme expliqué en relation à la figure 4. Cet angle diminue progressivement afin d'atteindre un effort de serrage final maximal.

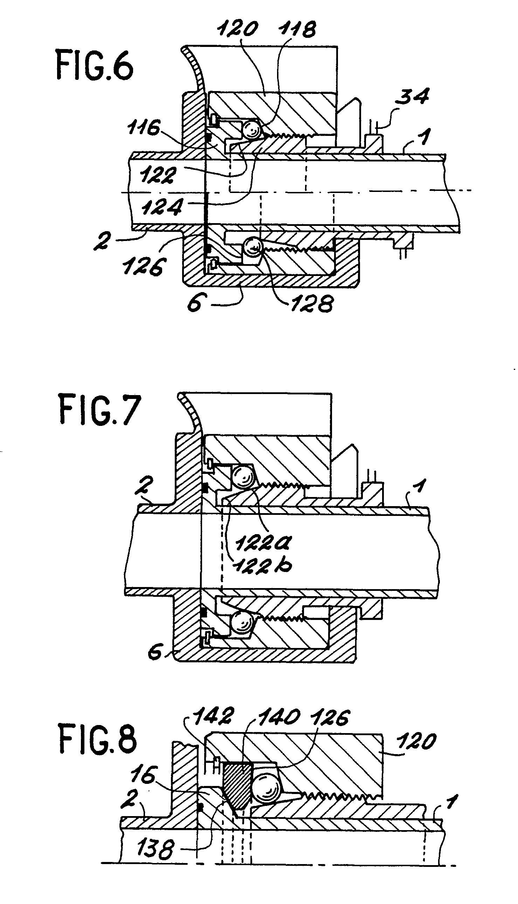

On a représenté sur la figure 6 une vue en coupe longitudinale d'un deuxième mode de réalisation de la présente invention. Dans ce mode de réalisation, le premier élément est constitué par la bague 120. Cette bague présente une première surface conique 118 d'axe D et d'angle λ. Le second élément est constitué par une bague 124 montée libre en rotation sur la tuyauterie 1. Elle comporte également une tige de manoeuvre 34 qui permet de l'entraîner en rotation.

Le troisième élément, présentant une surface plane perpendiculaire à l'axe D, est constitué par un flasque 116 solidaire de l'extrémité de la tuyauterie 1 et présentant une surface plane 126.

La bague 124 est filetée sur son pourtour périphérique extérieur. La bague 120 comporte un filetage correspondant à sa partie intérieure. Dans ce mode de réalisation, la bague 120 est bloquée en rotation, comme pour le mode de réalisation décrit en référence aux figures 1 à 3. Elle vient en butée contre la partie droite du boîtier fixe 6 au niveau du 1/2 cylindre 10 de la figure 1. La bague 124 est mobile en rotation et en translation. Les billes 128 prennent appui sur la surface fixe 118 de la bague 120 pour plaquer le flasque 116 contre le plan de joint.

On a représente sur la figure 7 une variante de réalisation da la figure 6, qui en diffère seulement par le fait que la deuxième surface conique d'axe D 122 et d'angle μ est réalisée en deux parties: une première partie 122b d'angle de conicité plus important permet une avance rapide, et une partie 122a d'angle de conicité plus faible permettant le serrage final. Il s'agit donc de la transposition au mode de réalisation de la figure 6 de ce qui a été expliqué en référence à la figure 4. Bein entendu, la surface 122 pourrait également présenter une courbure variable.

On a représenté sur la figure 8 une modification de la réalisation décrite en référence à la figure 6. La modification consiste en ce que le flasque 116 comportant la surface plane 126 a été réalisé en deux parties. Il se compose d'un flasque 16 comportant une surface d'appui 138 et d'une bague rapportée 140 qui comporte la surface plane 126. Le diamètre extérieur de la bague 140 correspond au diamètre d'un alésage de la bague 120. Une pièce d'arrêt telle qu'un circlips 142 retient la bague 140 à l'intérieur de l'alésage de la bague 120. Cette solution présente l'avantage de simplifier la fabrication du flasque 116.

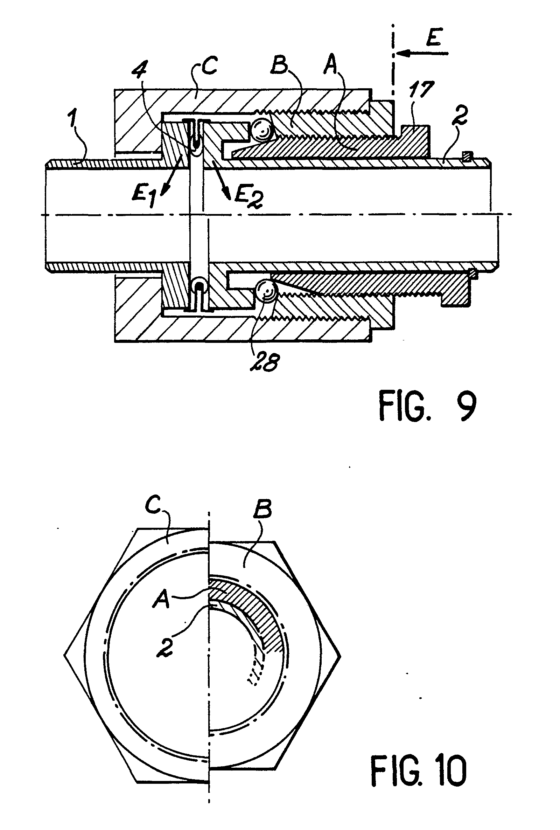

Une autre variante est représentée sur les figures 9 et 10. Dans cette variante, la surface conique d'angle λ est formée sur la bague B, la surface conique d'angle μ sur la bague A, et la surface plane perpendiculaire à l'axe D sur l'embout E2 solidaire de la pièce 2.

L'application du système multiplicateur d'effort du raccord biconique de l'invention peut présenter les deux aspects suivants:

—Pour les dimensions standard retenues actuellement diminuer considérablement les efforts de serrage.

—Augmenter les diamètres des standards possibles au-dèla des dimensions retenues et limitées actuellement par la valeur des efforts de serrage. Si l'on se reporte à la figure 9 le montage du raccordement sera réalisé dans l'ordre suivant.

—Les canalisations 1 et 2 comportent à leur extrémité les embouts $E_1$ et $E_2$ soudés.

—L'embout $E_2$ porte le système multiplicateur d'effort suivant l'invention et composé des pièces A, B et la couronne de billes.

—L'embout $E_1$ porte la pièce C qui est un écrou à épaulement.

—Sur la 1/2 coupe inférieure de la figure 9, après pose du joint d'étanchéité 4 entre les embouts $E_1$ et $E_2$ l'écrou C est vissé manuellement sur la pièce B jusqu'au contact de l'épaulement 17.

—La 1/2 coupe supérieure de la figure 9 montre le joint d'étanchéité serré entre les embouts $E_1$ et $E_2$ à la suite de la rotation de l'écrou A, qui conduit à l'avance de la surface conique d'angle μ. Cela provoque un déplacement radial vers l'extérieur des billes 28. Les billes, prenant appui sur la surface conique d'angle λ agissant sur l'embout $E_2$ et compriment le joint 4.

## Revendications

1. Dispositif de raccordment étanche d'une première tuyauterie (1) à une seconde tuyauterie (2) selon une direction (D), la première tuyauterie (1) étant munie d'une bride (16) et la seconde tuyauterie (2) étant munie d'une bride (6), un joint d'étanchéité (4) étant interposé entre lesdites brides (16) et (6), et des moyens pour serrer l'une contre l'autre lesdites brides (16) et (6) afin de comprimer le joint d'étanchéité (4) selon la direction (D), caractérisé en ce que les moyens pour serrer l'une contre l'autre lesdites brides (16) et (6) sont constitués par un mécanisme démultiplicateur d'effort situé d'un côté de la zone d'étanchéité selon la direction axiale (D), comprenant trois surfaces d'axe (D), à savoir une surface (18) croissante monotone d'axe (D) et d'angle initial λ proche de 90° mais inférieur à 90°, une surface (22) croissante monotone d'axe (D) et d'angle initial μ de faible valeur et une surface plane (26) perpendiculaire à la direction (D), le plan et les deux surfaces croissantes monotones étant disposés relativement les uns par rapport aux autres de manière à déterminer un espace dans lequel est logée une couronne (28) extensible et rétractable radialement, lesdites trois surfaces (18, 22, 26) étant réalisées, pour la surface (18) d'angle initial λ, sur ladite bride (16), pour la surface (26) perpendiculaire à la direction (D), sur la surface frontale d'une bague intérieure (24) entourant la tuyauterie (1), et pour la surface (22) d'angle initial μ, sur une surface intérieure d'une bague extérieure (20), ladite bague intérieure (24) comportant un filetage extérieur et ladite bague extérieure (20) comportant un filetage intérieur coopérant entre eux, la bride (6) reliant l'une des bagues intérieure (24) ou extérieure (20) selon la direction (D).

2. Dispositif de raccordment étanche d'une première tuyauterie (1) à une seconde tuyauterie (2) selon une direction (D), la première tuyauterie (1) étant munie d'une bride (116) et la seconde tuyauterie (2) étant munie d'une bride (6), un joint d'étanchéité (4) étant interposé entre lesdites brides (116) et (6), et des moyens pour serrer l'une contre l'autre lesdites brides (116) et (6) afin de comprimer le joint d'étanchéité (4) selon la direction (D), caractérisé en ce que les moyens pour serrer l'une contre l'autre lesdites brides (116) et (6) sont constitués par un mécanisme démultiplicateur d'effort situé d'un côté de la zone d'étanchéité selon la direction axiale (D), comprenant trois surfaces d'axe (D), à savoir une surface (118) croissante monotone d'axe (D) et d'angle initial λ proche de 90° mais inférieur à 90°, une surface (122) croissante monotone d'axe (D) et d'angle initial μ de faible valeur et une surface plane (126) perpendiculaire à la direction (D), le plan et les deux surfaces croissantes monotones étant disposés relativement les uns par rapport aux autres de manière à déterminer un espace dans lequel est logée une couronne (28) extensible et rétractable radialement, lesdites trois surfaces (118, 122, 126) étant réalisées, pour la surface (118) d'angle initial λ, sur une surface intérieure d'une bague extérieure (120), pour la surface (122) d'angle initial μ, sur une surface extérieure d'une bague intérieure (124) entourant la tuyauterie (1), et pour la surface (126) perpendiculaire à la direction (D), sur ladite bride (116), ladite bague intérieure (124) comportant un filetage extérieur et ladite bague extérieure (120) comportant un filetage intérieur coopérant entre eux, la bride (6) reliant l'une des bagues intérieure (124) ou extérieure (120) selon la direction (D).

3. Dispositif selon la revendication 1 ou 2, caractérisé en ce que la bride (6) est constituée par un boîtier solidaire de la seconde tuyauterie (2), le boîtier (6) comportant une goulotte d'introduction (8) qui se termine par un demi-cylindre (10) et par une gorge (14) pratiquée dans la bague intérieure (24, 124), ladite gorge (14) pénétrant dans de demi-cylindre (10) du boîtier (6).

4. Dispositif selon la revendication 1 ou 2, caractérisé en ce que ladite couronne (28) extensible et rétractable radialement est constituée au moins par des billes (28).

5. Dispositif selon la revendication 1 ou 2, caractérisé en ce que l'une au moins desdites première et seconde surfaces croissantes monotones (18, 118; 22, 122) est constituée de deux cônes d'angles différentes.

6. Dispositif selon la revendication 1 ou 2, caractérisé en ce que l'une au moins desdites première et seconde surfaces croissantes monotones (18, 118; 22, 122) présente une courbure variable.

7. Dispositif selon la revendication 2, caractérisé en ce qu'il comporte une bague (C) arrêtée en translation par rapport à la tuyauterie (1) et une bague (B) vissée dans ladite bague (C).

**Patentansprüche**

1. Vorrichtung zur undurchlässigen Kupplung einer ersten Rohrleitung (1) an eine zweite Rohrleitung (2) gemäß einer Richtung (D), wobei die erste Rohrleitung (1) mit einem Flansch (16) und die zweite Rohrleitung mit einem Flansch (6) versehen ist und eine Dichtungsverbindung (4) zwischen den genannten Flanschen (16) und (6) geschaltet ist, und Vorrichtungen zum festen Gegeneinanderpressen der genannten Flansche (16) und (6), um die Dichtungsverbindung (4) gemäß Richtung (D) zu komprimieren, dadurch gekennzeichnet, daß die Vorrichtung zum Gegeneinanderpressen der besagten Flansche (16) und (6) aus einem Kraftminderungsmechanismus bestehen, der sich auf einer Seite des Dichtungsbereiches gemäß Achsenrichtung (D) befindet und drei Flächen einer Achse (D) umfaßt, nämlich eine zunehmende gleichförmige Fläche (18) der Achse (D) und einem Anfangswinkel λ von ungefähr 90°, jedoch unter 90°, eine zunehmende gleichförmige Fläche (22) der Achse (D) und einem Anfangswinkel μ von kleiner Größe und eine plane Fläche (26) senkrecht zur Richtung (D), wobei die Ebene und die beiden zunehmenden gleichförmigen Flächen in einer Weise zueinander angeordnet sind, daß ein Zwischenraum entsteht, in dem ein radial dehnbarer und zusammenziehbarer Kranz (28) untergebracht ist, wobei die drei genannten Flächen (18, 22, 26) so angebracht sind, daß sich die Fläche (18) mit einem Anfangswinkel λ auf dem genannten Flansch (16), die Fläche (26) senkrecht zur Richtung (D) auf der Frontfläche eines Innenringes (24), der die Rohrleitung (1) umgibt, und die Fläche (22) mit einem Anfangswinkel μ sich auf der Innenfläche eines Außenringes (20) befindet, wobei der genannte Innenring (24) ein Außenge- winde und der genannte Aussenring (20) ein Innengewinde hat, die beide aufeinander abgepaßt sind, und der Flansch (6) einen der Außen- (20) oder Innenringe (24) gemäß Richtung (D) verbindet.

2. Vorrichtung zur undurchlässigen Kupplung einer ersten Rohrleitung (1) an eine zweite Rohrleitung (2) gemäß einer Richtung (D), wobei die erste Rohrleitung (1) mit einem Flansch (116) und die zweite Rohrleitung (2) mit einem Flansch (6) versehen ist und eine Dichtungsverbindung (4) zwischen den beiden genannten Flanschen (116) und (6) geschaltet ist, und Vorrichtungen zum Gegeneinanderpressen der genannten Flansche (116) und (6), um die Dichtungsverbindung (4) gemäß Richtung (D) zu komprimieren, dadurch gekennzeichnet, daß die Vorrichtungen zum Gegeneinanderpressen der genannten Flansche (116) und (6) aus einem Kraftminderungsmechanismus bestehen, der sich auf einer Seite des Dichtungsbereiches gemäß Achsenrichtung (D) befindet und drei Flächen einer Achse (D) umfaßt, nämlich eine zunehmende gleichförmige Fläche (118) der Achse (D) und einem Anfangswinkel λ von ungefähr 90°, jedoch unter 90°, eine zunehmende gleichförmige Fläche (122) der Achse (D) und einem Anfangswinkel μ von kleiner Größe und eine plane Fläche (126) senkrecht zur Richtung (D), wobei die Ebene und die beiden zunehmenden gleichförmigen Flächen in einer Weise zueinander angeordnet sind, daß ein Zwischenraum entsteht, in dem ein radial dehnbarer und zusammenziehbarer Kranz (28) untergebracht ist, wobei die drei genannten Flächen (118, 122, 126) so ausgeführt sind, daß sich die Fläche (118) mit einem Anfangswinkel λ auf der Innenfläche eines Außenringes (20), die Fläche (122) mit einem Anfangswinkel μ sich auf der Außenfläche eines Innenringes (124), der die Rohrleitung (1) umgibt, und die Fläche (126) senkrecht zur Richtung (D) sich auf dem genannten Flansch (116) befindet, wobei der genannte Innenring (124) ein Außengewinde und der genannte Außenring (120) ein Innengewinde besitzt, die beide aufeinander abgepaßt sind, und der Flansch (6) einen der Innen- (124) oder Außenringe (120) gemäß Richtung (D) verbindet.

3. Vorrichtung nach dem Patentanspruch 1 oder 2, dadurch gekennzeichnet, daß der Flansch (6) aus einem mit der Rohrleitung (2) verbundenen Rand besteht, wobei der Rand (6) eine Einführungsrinne (8) besitzt, die in einem Halbzylinder (10) und einer Vertiefung (14) in dem inneren Ring (24, 124) endet, wobei die genannte Vertiefung (14) in den Halbzylinder (10) des Randes (6) hineingeht.

4. Vorrichtung nach dem Patentanspruch 1 oder 2, dadurch gekennzeichnet, daß der genannte radial dehnbare und zusammenziehbare Kranz (28) zumindest aus Kugeln (28) besteht.

5. Vorrichtung nach dem Patentanspruch 1 oder 2, dadurch gekennzeichnet, daß zumindest eine der zwei genannten zunehmenden gleichförmigen Flächen (18, 118; 22, 122) aus zwei Kegeln verschiedener Winkel besteht.

6. Vorrichtung nach dem Patentanspruch 1 oder 2, dadurch gekennzeichnet, daß zumindest eine der zwei genannten zunehmenden gleichförmigen Flächen (18, 118; 22, 122) eine variable Wölbung aufweist.

7. Vorrichtung nach dem Patentanspruch 2, dadurch gekennzeichnet, daß sie einen Ring (C), der im Vergleich zur Rohrleitung (1) in Parallelverschiebung arretiert ist, und einen auf den genannten Ring (C) geschraubten Ring (B) umfaßt.

**Claims**

1. Device for the tight connection of a first pipe (1) to a second pipe (2) in a direction (D), the first pipe (1) being provided with a flange (16) and the second pipe (2) being provided with a flange (6), a gasket (4) being interposed between said flanges (16) and (6) and means for locking together said flanges (16) and (6) in order to compress the gasket (4) in direction (D), characterized in that the means for locking together the said flanges (16) and (6) are constituted by a force reduction mechanism located on one side of the sealing zone in axial direction (D) having three surfaces of axis (D), namely a rising monotonic surface (18) of axis (D) and an initial angle λ close to 90°, but less than 90°, a rising monotonic surface (22) of axis (D) and a low value initial angle μ and a planar surface (26) perpendicular to said direction (D), the plane and the two rising monotonic surfaces being disposed with respect to one another in such a way as to define a space in which is located a ring (28), which is radially extensible and retractable, said three surfaces (18, 22, 26) being realized, for the surface (18) of initial angle λ, on the said flange (16), for the surface (26) perpendicular to the direction (D), on the front surface of an internal bush (24) surrounding pipe (1) and for the surface (22) of initial angle μ, on an internal surface of an external bush (20), said internal bush (24) having an external thread and said external bush (20) an internal thread which cooperate with one another, the flange (6), connecting one of the said internal (24) or external (20) bushes in direction (D).

2. Device for the tight connection of a first pipe (1) to a second pipe (2) in a direction (D), the first pipe (1) being provided with a flange (116) and the second pipe (2) being provided with a flange (6), a gasket (4) being interposed between said flanges (116) and (6) and means for locking together said flanges (116) and (6) in order to compress the gasket (4) in direction (D), characterized in that the means for locking together the said flanges (116) and (6) are constituted by a force reduction mechanism located on one side of the scaling zone in axial direction (D) having three surfaces of axis (D), namely a rising monotonic surface (118) of axis (D) and an initial angle λ close to 90°, but less than 90°, a rising monotonic surface (122) of axis (D) and a low value initial angle μ and a planar surface (126) perpendicular to said direction (D), the plane and the two rising monotonic surfaces being disposed with respect to one another in such a way as to define a space in which is located a ring (28), which is radially extensible and retractable, said three surfaces (118, 122, 126), being realized, for the surface (118) of initial angle λ, on an internal surface of an external bush (120), for the surface (122) of initial angle μ, on an external surface of an internal bush (124) surrounding pipe (1) and for the surface (126) perpendicular to direction (D), on said flange (116), the internal bush (124) having an external thread and the external bush (120) having an internal thread which cooperate with one another, the flange (6) connecting one of the internal (124) or external (120) bushes in direction (D).

3. Device according to claims 1 or 2, characterized in that flange (6) is constituted by a box integral with the second pipe (2), the box (6) having an introduction chute (8), which is terminated by a semicylinder (10) and by a groove (14) made in the internal bush (24, 124), said groove (14) penetrating the semicylinder (10) of box (6).

4. Device according to claims 1 or 2, characterized in that the radially extensible and retractable ring (28) is constituted at least by balls (28).

5. Device according to claims 1 or 2, characterized in that at least one of said first and second rising monotonic surfaces (18, 118, 22, 122) is constituted by two cones of different angles.

6. Device according to claims 1 or 2, characterized in that at least one of said first and second rising monotonic surfaces (18, 118, 22, 122) has a variable curvature.

7. Device according to claim 2, characterized in that it has a bush (C) stopped in translation with respect to the pipe (1) and a bush (B) screwed into said bush (C).

FIG.1

EP 0 124 430 B1

# FIG.2

28

1

14

24

10

6

# FIG.4

28 22a 22b 20

# FIG.3

25

14

8

10

# FIG.5

28 22 20

2

FIG.6

120  118

34

116

122

124

2

126

1

6    128

FIG.7

2

1

122a

122b

6

FIG.8

142  140 126

120

16

2

1

138

3

FIG. 9

FIG. 10